# EUROPEAN PATENT APPLICATION

(11) **EP 4 358 180 A1**
(43) Date of publication of application: **24.04.2024**
(21) Application number: 23190130.7
(22) Date of filing: 07.08.2023
(51) Int. Cl.: H01M 4/134, C01B 33/00, H01M 4/36, H01M 4/38, H01M 4/62, H01M 10/052, H01M 4/04, H01M 4/1395, H01M 4/02

(54) **NEGATIVE ELECTRODE FOR RECHARGEABLE LITHIUM BATTERY AND RECHARGEABLE LITHIUM BATTERY INCLUDING SAME**

(30) Priority: 19.10.2022 KR 20220135250
(71) Applicant: Samsung SDI Co., Ltd., Yongin-si, Gyeonggi-do 17084 (KR)
(72) Inventor: KWON, Seunguk, 17084 Yongin-si (KR)
(74) Representative: Marks & Clerk LLP

(57) **Abstract**

Disclosed is a negative electrode for a rechargeable lithium battery and a rechargeable lithium battery including the same, and the negative active material includes a core consisting of silicon particles having a particle diameter of about 0.8 µm to about 2 µm and an amorphous carbon coating layer formed on a surface of the core.

## Description

### BACKGROUND OF THE INVENTION

### (a) Field of the Invention

It relates to a negative electrode for a rechargeable lithium battery and a rechargeable lithium battery including the same.

### (b) Description of the Related Art

A rechargeable lithium battery which has recently drawn attention as a power source for small portable electronic devices, uses an organic electrolyte solution and thereby, has twice or more as high a discharge voltage as a conventional battery using an alkali aqueous solution and accordingly, high energy density.

As the negative active material for the rechargeable lithium battery, the investigation for a silicon negative active material with a high discharge specific capacity of about 3400 mAh/g, which is capable of rapidly bonding to lithium ions and enabling fast charging and discharging have been actively undertaken.

However, silicon has low high-rate charge and discharge characteristics.

### SUMMARY OF THE INVENTION

One embodiment provides a negative active material for a rechargeable lithium battery exhibiting high power characteristics.

Another embodiment provides a rechargeable lithium battery including the negative active material.

According to one embodiment, a negative active material for a rechargeable lithium battery including a core consisting of silicon particles having a particle diameter of about 0.8 µm to about 2 µm; and an amorphous carbon coating layer on a surface of the silicon particle core, is provided.

An amount of the amorphous carbon may be about 20 wt% or less based on the total 100 wt% of the negative active material. According to one embodiment, an amount of the amorphous carbon may be about 5 wt% to about 20 wt% based on the total 100 wt% of the negative active material.

The silicon particles may have a particle diameter of about 0.8 µm to about 1.5 µm.

The amorphous carbon may be soft carbon, hard carbon, mesophase pitch carbide, sintered cokes, or combinations thereof.

According to another embodiment, a rechargeable lithium battery includes a negative electrode including a negative active material layer including the negative active material; a positive electrode including a positive active material; and a non-aqueous electrolyte.

An amount of the silicon particles may be about 80 wt% or more based on the total 100 wt% of the negative active material layer, and an amount of the silicon particles may be about 80 wt% to about 95 wt% based on the total 100 wt% of the negative active material layer.

At least some of the above and other features of the invention are set out in the claims.

Other embodiments are included in the following detailed description.

A negative active material for a rechargeable lithium battery according to one embodiment may provide a rechargeable lithium battery exhibiting high power characteristics.

### BRIEF DESCRIPTION OF THE DRAWINGS

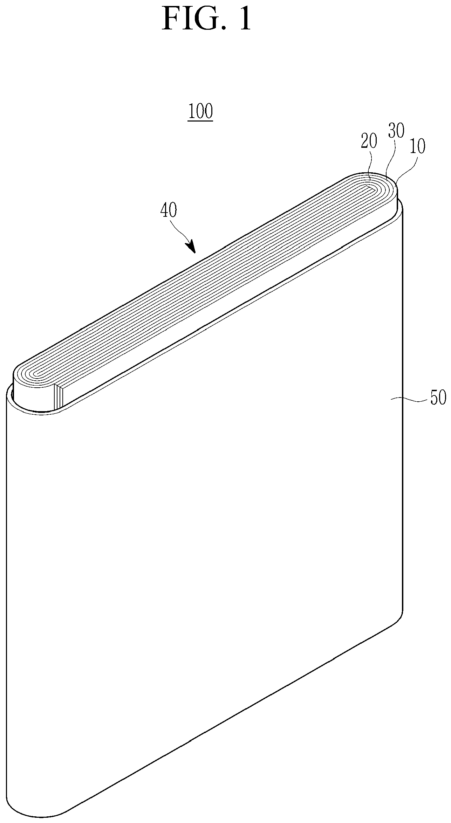

FIG. 1 is a schematic view showing a structure of the rechargeable lithium battery according to one embodiment.

### DETAILED DESCRIPTION OF THE INVENTION

Hereinafter, embodiments of the present invention are described in detail. However, the present invention is not limited to these embodiments and the present invention is defined by the scope of claims.

When a definition is not otherwise provided in the specification, an average particle diameter indicates an average particle diameter (D50) where a cumulative volume is about 50 volume% in a particle distribution. The average particle diameter (D50) may be measured by a method well known to those skilled in the art, for example, by a particle size analyzer, or by a transmission electron microscopic image, a scanning electron microscopic, or field emission scanning electron microscopy (FE-SEM). Alternatively, a dynamic light-scattering measurement device is used to perform a data analysis, and the number of particles is counted for each particle size range, and from this, the average particle diameter (D50) value may be easily obtained through a calculation.

A negative active material for a rechargeable lithium battery according to one embodiment may include a core consisting of silicon particles with a particle diameter of about 0.8 µm to about 2 µm and an amorphous carbon coating layer on a surface of the core.

In other words, the negative active material for a rechargeable lithium battery includes negative active material particles, wherein each negative active material particle has a core consisting of a silicon particle that is coated on a surface with an amorphous carbon coating layer. The average particle diameter (D50) of the silicon particles in the negative active material is about 0.8 µm to about 2 µm.

In the negative active material, the core only includes, i.e., consists of only silicon particles, and particularly, consists of silicon particles having a large particle diameter, i.e. a particle diameter of about 0.8 µm to about 2 µm. The silicon particles may have a particle diameter of about 0.8 µm to about 2 µm, or about 0.8 µm to about 1.5 µm.

When the particle diameter of the silicon particles is within the range, the insertion and desertion of lithium ions mainly occur on the surface of the silicon particles during charge and discharge, and the diffusion rate of lithium may be improved during high-rate charge and discharge. The insertion of lithium up to the inside, center portion of silicon particles causes the desertion of lithium during discharging to slow down, thereby deteriorating high-rate charge and discharge characteristics. On the other side, the negative active material according to one embodiment includes silicon particles with a large particle diameter, so that the insertion and desertion of lithium mainly occur on the surface of the silicon particles, leading to a shorter distance for lithium to be desorbed during discharge, thereby improving the rate of desorbing lithium.

Moreover, the silicon particles having a particle diameter of about 0.8 µm to about 2 µm have a large reaction area which allows for more improvement of the diffusion speed of lithium ions.

If the particle diameter of the silicon particles is smaller than 0.8 µm, the insertion and the desertion of lithium ions occur up to the inside of the silicon particles, causing a decrease in the diffusion speed of lithium, which is not appropriate.

If the particle diameter of the silicon particles is larger than 2 µm, the reaction area is undesirably small.

The negative active material according to one embodiment includes an amorphous carbon coating layer formed on the surface of the silicon particles, which may prevent the oxidation of the silicon particle, which is the core, and thus, it may suppress to the production of silicon oxide, which may react with lithium to reduce lithium utilization. As the negative active material includes the amorphous carbon coating layer, the volume expansion of the silicon particles may be effectively suppressed during charging and discharging, and the side reaction with an electrolyte may be more prevented.

In one embodiment, an amount of the amorphous carbon coating layer may be about 20 wt% or less, about 5 wt% to about 20 wt%, about 5 wt% to about 15 wt%, or also, about 10 wt% to about 15 wt% based on the total 100 wt% of the negative active material. When the amount of the amorphous carbon coating layer is within the range, the increases in capacity, the stable electrical conductivity, and the improved cycle-life characteristics may be realized.

The negative active material according to one embodiment consists of the core (silicon particle core) and the amorphous carbon coating layer, and thus, an amount excluding the amorphous carbon may correspond to the amount of the silicon particle core.

The amorphous carbon may be soft carbon, hard carbon, mesophase pitch carbide, sintered cokes, or combinations thereof.

The negative electrode for a rechargeable lithium battery according to one embodiment includes a negative active material layer including the negative active material and a current collector supporting the negative active material layer. The negative active material is the negative active material according to one embodiment.

In the negative active material layer, an amount of silicon particles may be about 80 wt% or more, about 80 wt% to about 95 wt%, or about 80 wt% to about 84 wt% based on the total 100 wt% of the negative active material layer. As such, the negative electrode according to one embodiment may include silicon particles in the negative active material layer at a larger amount of about 80 wt% or more.

In the negative active material layer, an amount of the negative active material may be 96 wt% to 99 wt%.

The negative active material layer may include a binder, and may further include a conductive material.

An amount of the binder may be about 1 wt% to about 4 wt% based on the total 100 wt% of the negative active material layer. Furthermore, when the conductive material is further included, an amount of the negative active material may be about 96 wt% to about 98 wt% based on the total 100 wt% of the negative active material layer, an amount of the binder may be about 1 wt% to about 2 wt% based on the total 100 wt% of the negative active material layer, and an amount of the conductive material may be about 1 wt% to about 2 wt% based on the total 100 wt% of the negative active material layer.

The binder improves binding properties of negative active material particles with one another and with a current collector. The binder may be a non-aqueous binder, an aqueous binder, or a combination thereof.

The non-aqueous binder may be an ethylene propylene copolymer, polyacrylonitrile, polystyrene, polyvinylchloride, carboxylated polyvinylchloride, polyvinyl fluoride, polyurethane, polytetrafluoro ethylene, polyvinylidene fluoride, polyethylene, polypropylene, polyamideimide, polyimide, or combinations thereof.

The aqueous binder may be a styrene-butadiene rubber, an acrylated styrene-butadiene rubber (ABR), an acrylonitrile-butadiene rubber, an acryl rubber, a butyl rubber, a fluorine rubber, an ethylene oxide containing polymer, polyvinyl pyrrolidone, polyepichlorohydrin, polyphosphazene, an ethylene propylenediene copolymer, polyvinylpyridine, chlorosulfonated polyethylene, latex, a polyester resin, an acryl resin, a phenol resin, an epoxy resin, polyvinyl alcohol, or combinations thereof.

When the aqueous binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metal may be Na, K, or Li. The thickener may be included in an amount of about 0.1 parts by weight to about 3 parts by weight based on 100 parts by weight of the negative electrode active material.

The conductive material is included to provide electrode conductivity, and any electrically conductive material may be used as a conductive material unless it causes a chemical change. Examples of the conductive material may be a carbon-based material such as natural graphite, artificial graphite, carbon black, acetylene black, ketjen black, carbon fiber, and the like; a metal-based material of a metal powder or a metal fiber including copper, nickel, aluminium, silver, and the like; a conductive polymer such as a polyphenylene derivative, and the like, or a mixture thereof.

The current collector may include one selected from a copper foil, a nickel foil, a stainless steel foil, a titanium foil, a nickel foam, a copper foam, a polymer substrate coated with a conductive metal, and a combination thereof, but is not limited thereto.

A rechargeable lithium battery according to one embodiment includes the negative electrode, a positive electrode, and an electrolyte.

The positive electrode may include a current collector and a positive active material layer formed on the current collector.

The positive electrode active material may include lithiated intercalation compounds that reversibly intercalate and deintercalate lithium ions, and specifically, one or more composite oxides of a metal selected from cobalt, manganese, nickel, and a combination thereof, and lithium may be used. More specifically, the compounds represented by one of the following chemical formulae may be used. LiₐA_{1-b}X_{b}D¹₂ (0.90≤a≤1.8, 0≤b≤0.5); LiₐA_{1-b}X_{b}O_{2-c1}D¹_{c1} (0.90≤a≤1.8, 0≤b≤0.5, 0≤c1≤0.05); LiₐE_{1-b}X_{b}O_{2-c1}D¹_{c1} (0.90≤a≤1.8, 0≤b≤0.5, 0≤c1≤0.05); LiₐE_{2-b}X_{b}O_{4-c1}D¹_{c1} (0.90≤a≤1.8, 0≤b≤0.5, 0≤c1≤0.05); LiₐNi_{1-b-c}Co_{b}X_{c}D¹_{α} (0.90≤a≤1.8, 0≤b≤0.5, 0≤c≤0.5, 0≤α≤2); LiₐNi_{1-b-c}Co_{b}X_{c}O_{2-α}T_{α} (0.90≤a≤1.8, 0≤b≤0.5, 0≤c≤0.5, 0<α<2); LiₐNi_{1-b-c}Co_{b}X_{c}O_{2-α}T₂ (0.90≤a≤1.8, 0≤b≤0.5, 0≤c≤0.5, 0<α<2); LiₐNi_{1-b-c}Mn_{b}X_{c}D¹_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{b}X_{c}O_{2-α}T₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}Mn_{d}GₑO₂ (0.90≤a≤1.8, 0≤b≤0.9, 0≤c≤0.5, 0≤d≤0.5, 0.001≤e≤0.1); LiₐNiG_{b}O₂ (0.90≤a≤1.8, 0.001≤b≤0.1) LiₐCoG_{b}O₂ (0.90≤a ≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li_{(3-f)}J₂(PO₄)₃ (0≤f≤2); Li_{(3-f)}Fe₂(PO₄)₃ (0≤f≤2); LiₐFePO₄ (0.90≤a≤1.8).

In the above chemical formulae, A is selected from Ni, Co, Mn, or combinations thereof of; X is selected from Al, Ni, Co, Mn, Cr, Fe, Mg, Sr, V, a rare earth element, or combinations thereof; D¹ is selected from O, F, S, P, or combinations thereof; E is selected from Co, Mn, or combinations thereof; T is selected from F, S, P, or combinations thereof; G is selected from Al, Cr, Mn, Fe, Mg, La, Ce, Sr, V, or combinations thereof; Q is selected from Ti, Mo, Mn, or combinations thereof; Z is selected from Cr, V, Fe, Sc, Y, or combinations thereof; J is selected from V, Cr, Mn, Co, Ni, Cu, or combinations thereof.

Also, the compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound, and, for example, the method may include any coating method such as spray coating, dipping, and the like, but is not illustrated in more detail since it is well-known in the related field.

In the positive electrode, an amount of the positive active material may be about 90 wt% to about 98 wt% based on the total weight of the positive active material layer.

In one embodiment, the positive active material layer may further include a binder and a conductive material. Herein, the binder and the conductive material may be included in an amount of about 1 wt% to about 5 wt%, respectively based on the total amount of the positive active material layer.

The binder improves binding properties of positive active material particles with one another and with a current collector. Examples of the binder may be polyvinyl alcohol, carboxymethyl cellulose, hydroxypropyl cellulose, diacetyl cellulose, polyvinyl chloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The conductive material is included to provide electrode conductivity, and any electrically conductive material may be used as a conductive material unless it causes a chemical change. Examples of the conductive material include a carbon-based material such as natural graphite, artificial graphite, carbon black, acetylene black, ketjen black, carbon fiber, and the like; a metal-based material of a metal powder or a metal fiber including copper, nickel, aluminium, silver, and the like; a conductive polymer such as a polyphenylene derivative, or mixture thereof.

The current collector may be an aluminium foil, a nickel foil, or combinations thereof, but is not limited thereto.

The positive active material layer and the negative active material layer may be prepared by mixing the active material, the binder and optionally, the conductive material in a solvent to prepare an active material composition and coating the active material composition on the current collector. Such an active material layer preparation method is well known in the related art so that the detailed description will be omitted in the specification. The solvent may be N-methyl pyrrolidone, and the like, but is not limited thereto. When the aqueous binder is used in the negative active material layer, water may be used as a solvent used in the negative active material composition preparation.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, propyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. Furthermore, the ketone-based solvent may include cyclohexanone, and the like. In addition, the alcohol-based solvent may include ethanol, isopropyl alcohol, and the like, and the aprotic solvent may include nitriles such as R-CN (where R is a C2 to C20 linear, branched, or cyclic hydrocarbon, and may include a double bond, an aromatic ring, or an ether bond), amides such as dimethylformamide, and the like, dioxolanes such as 1,3-dioxolane, and the like.

The organic solvent may be used alone or in a mixture. When the organic solvent is used in a mixture, the mixture ratio may be controlled in accordance with a desirable battery performance and it may be well known to one in related art.

Furthermore, the carbonate-based solvent may include a mixture with a cyclic carbonate and a linear carbonate. The cyclic carbonate and linear carbonate are mixed together in a volume ratio of about 1:1 to about 1:9, and when the mixture is used as an electrolyte, it may have enhanced performance.

When the non-aqueous organic solvents are mixed and used, a mixed solvent of cyclic carbonate and linear carbonate, a mixed solvent of cyclic carbonate and a propionate-based solvent, or a mixed solvent of cyclic carbonate, linear carbonate and a propionate-based solvent may be used. The propionate-based solvent may include methyl propionate, ethyl propionate, propyl propionate, or combinations thereof.

Herein, when a mixture of cyclic carbonate and linear carbonate, or a mixture of cyclic carbonate and propionate-based solvent is used, it may be desirable to use it with a volume ratio of about 1:1 to about 1:9 considering the performances. Furthermore, cyclic carbonate, linear carbonate and a propionate-based solvent may be mixed and used at a volume ratio of 1:1:1 to 3:3:4. The mixing ratio of the solvents may be also appropriately adjusted according to the desired properties.

The non-aqueous organic solvent may further include an aromatic hydrocarbon-based solvent as well as the carbonate-based solvent. Herein, the carbonate-based solvent and the aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1. 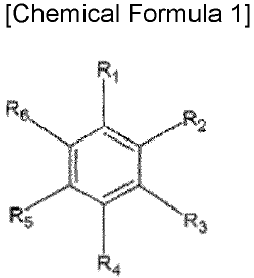 (In Chemical Formula 1, R₁ to R₆ are the same or different and are selected from hydrogen, halogen, a C1 to C10 alkyl group, a haloalkyl group, and a combination thereof.)

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or combiations thereof.

The electrolyte may further include vinylene carbonate, or an ethylene carbonate-based compound represented by Chemical Formula 2, as an additive for improving cycle life. 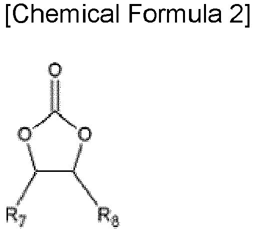 (In Chemical Formula 2, R₇ and R₈ are the same or different and may be each independently hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.)

Examples of the ethylene carbonate-based compound may include difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate, and the like. An amount of the additive for improving the cycle-life characteristics may be used within an appropriate range.

The electrolyte may further include vinylethylene carbonate, propane sultone, succinonitrile, or combinations thereof, and herein, the used amount may be suitably adjusted.

The lithium salt dissolved in an organic solvent supplies a battery with lithium ions, basically operates the rechargeable lithium battery, and improves transportation of the lithium ions between positive and negative electrodes. Examples of the lithium salt may include one or two selected from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiPO₂F₂, LiN(CₓF₂ₓ₊₁SO₂)(C_{y}F_{2y+i}SO₂), where x and y are natural numbers, for example integers of 1 to 20, lithium difluoro(bisoxolato) phosphate), LiCl, Lil, LiB(C₂O₄)₂(lithium bis(oxalato) borate: LiBOB) and lithium difluoro(oxalato)borate (LiDFOB), as a supporting electrolytic salt. A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

The lithium secondary battery may further include a separator between the negative electrode and the positive electrode, depending on a kind of the battery. Examples of a separator material include polyethylene, polypropylene, polyvinylidene fluoride, and multi-layers having two or more layers thereof such as a polyethylene/polypropylene double-layered separator, a polyethylene/polypropylene/polyethylene triple-layered separator, and a polypropylene/polyethylene/polypropylene triple-layered separator.

FIG. 1 is an exploded perspective view of a rechargeable lithium battery according to an embodiment. The rechargeable lithium battery according to an embodiment is illustrated as a prismatic battery but is not limited thereto and may include variously-shaped batteries such as a cylindrical battery, a pouch battery, and the like.

Referring to FIG. 1, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte (not shown) may be impregnated in the positive electrode 10, the negative electrode 20 and the separator 30.

Hereinafter, examples of the present invention and comparative examples are described. These examples, however, are not in any sense to be interpreted as limiting the scope of the invention.

### (Example 1)

The silicon large particles having an average particle diameter D50 of 7.63 µm were pulverized via a jet-mill to prepare silicon particles having of an average particle diameter D50 of 0.93 µm.

The silicon particles were coated with a petroleum pitch, and heat-treated at 850 °C under an N₂ atmosphere to prepare a negative material including a silicon particle core and a soft carbon coating layer formed on the surface of the core. In the negative active material, the amounts of the silicon particles and the petroleum pitch used were adjusted so that the amount of the silicon particle core was about 90 wt% based on the total weight of the negative active material, and the amount of the soft carbon coating layer as about 10 wt% based on the total weight of the negative active material.

89 wt% of the negative active material, 3.6 wt% of a carbon black conductive material, 5 wt% of a graphite conductive material, 1.6 wt% of a styrene-butadiene rubber binder, and 0.8 wt% of a carboxymethyl cellulose thickener were mixed in a water solvent to prepare a negative active material slurry.

The negative active material slurry was coated on a Cu foil current collector and dried followed by pressurizing it using the conventional technique to prepare a negative electrode including the negative active material layer and the current collector supporting thereon. In the negative active material layer, the amount of the silicon particles was 80 wt% based on the total weight of the negative active material layer, and the amount of soft carbon was 9 wt% based on the total weight of the negative active material layer.

Using the negative electrode, a LiCoO₂ positive electrode, and an electrolyte, a 21700 rechargeable lithium full cell was fabricated. The electrolyte was used 1.5 M LiPF₆ dissolved in a mixed solvent of ethylene carbonate, ethylmethyl carbonate, dimethyl carbonate, and fluroethylene carbonate (3:5:1.5:0.5 volume ratio).

### (Example 2)

The silicon large particles having an average particle diameter D50 of 7.63 µm were pulverized via a jet-mill to prepare silicon particles having an average particle diameter D50 of 1.07 µm.

Except for using the silicon particles, a negative active material and a negative electrode were prepared by the same procedure as in Example 1.

Using the negative electrode, a 21700 rechargeable lithium battery was fabricated by the same procedure as in Example 1.

### (Example 3)

The silicon large particles having an average particle diameter D50 of 7.63 µm were pulverized via a jet-mill to prepare silicon particles having an average particle diameter D50 of 1.35 µm.

Except for using the silicon particles, a negative active material and a negative electrode were prepared by the same procedure as in Example 1.

Using the negative electrode, a 21700 rechargeable lithium battery was fabricated by the same procedure as in Example 1.

### (Example 4)

The silicon large particles having an average particle diameter D50 of 7.63 µm were pulverized via a jet-mill to prepare silicon particles having an average particle diameter D50 of 1.95 µm.

Except for using the silicon particles, a negative active material and a negative electrode were prepared by the same procedure as in Example 1.

Using the negative electrode, a 21700 rechargeable lithium battery was fabricated by the same procedure as in Example 1.

### (Comparative Example 1)

Except for using silicon large particles with an average particle diameter D50 of 7.63 µm, a negative active material and a negative electrode were prepared by the same procedure as in Example 1.

Using the negative electrode, a 21700 rechargeable lithium battery was fabricated by the same procedure as in Example 1.

### (Comparative Example 2)

The silicon large particles having an average particle diameter D50 of 7.63 µm were pulverized via a jet-mill to prepare silicon particles having an average particle diameter D50 of 4.24 µm.

Except for using the silicon particles, a negative active material and a negative electrode were prepared by the same procedure as in Example 1.

Using the negative electrode, a 21700 rechargeable lithium battery was fabricated by the same procedure as in Example 1.

### (Comparative Example 3)

The silicon large particles having an average particle diameter D50 of 7.63 µm were pulverized via a jet-mill to prepare silicon particles having an average particle diameter D50 of 0.73 µm.

Except for using the silicon particles, a negative active material and a negative electrode were prepared by the same procedure as in Example 1.

Using the negative electrode, a 21700 rechargeable lithium battery was fabricated by the same procedure as in Example 1.

### (Comparative Example 4)

The silicon large particles having an average particle diameter D50 of 7.63 µm were pulverized via a jet-mill to prepare silicon particles having an average particle diameter D50 of 2.17 µm.

Except for using the silicon particles, a negative active material and a negative electrode were prepared by the same procedure as in Example 1.

Using the negative electrode, a 21700 rechargeable lithium battery was fabricated by the same procedure as in Example 1.

### Experimental Example 1) Distribution of particle size

The particle size distribution of the silicon particles in the negative active materials according to Examples 1 to 4 and Comparative Examples 1 to 4 were measured using a particle size analyzer (Mastersizer 3000 available from Malvern Panalytical, Ltd.). The results are shown in Table 1.

**(Table 1)**

| | D10 (µm) | D50 (µm) | D90 (µm) |
|---|---|---|---|
| Example 1 | 0.66 | 0.93 | 1.27 |
| Example 2 | 0.81 | 1.07 | 1.52 |
| Example 3 | 0.95 | 1.35 | 1.88 |
| Example 4 | 1.52 | 1.95 | 2.51 |
| Comparative Example 1 | 2.92 | 7.63 | 14.26 |
| Comparative Example 2 | 1.19 | 4.24 | 11.83 |
| Comparative Example 3 | 0.56 | 0.73 | 1.04 |
| Comparative Example 4 | 1.52 | 2.17 | 3.03 |

### Experimental Example 2) Evaluation of high power

The rechargeable lithium cells according to Examples 1 to 4 and Comparative Examples 1 to 4 were charged and discharged by charging at 6 A, discharging at 6 A, and charging at 40 A and discharging at 40 A. A ratio of the discharge capacity at 40 A to the discharge capacity at 6 A was calculated. The results are shown in Table 2.

### Experimental Example 3) Evaluation of cycle-life retention

The rechargeable lithium cells according to Examples 1 to 4 and Comparative Examples 1 to 4 were charged at 6 A and discharged at 40 A for 200 cycles. A ratio of the discharge capacity at 200^{th} to the discharge capacity at 1^{st} cycle was calculated. The results are shown in Table 2.

The average particle diameter (D50) of the silicon particles shown in Table 1 are also shown in Table 2. Furthermore, in Table 2, an amount of the silicon particles is based on the total weight of the negative active material layer.

**(Table 2)**

| | Average particle diameter of silicon particles (D50, µm) | Amount of silicon particles (wt%) | Dischargeability at high rate (%) | Capacity retention (%) |
|---|---|---|---|---|
| Example 1 | 0.93 | 80% | 90.0 | 70.9 |
| Example 2 | 1.07 | 80% | 91.0 | 71.1 |
| Example 3 | 1.35 | 80% | 89.1 | 69.6 |
| Example 4 | 1.95 | 80% | 89.7 | 73.2 |
| Comparative Example 1 | 7.63 | 80% | 48.1 | 35.6 |
| Comparative Example 2 | 4.24 | 80% | 71.4 | 49.3 |
| Comparative Example 3 | 0.73 | 80% | 77.5 | 62.2 |
| Comparative Example 4 | 2.17 | 80% | 74.8 | 62.4 |

As shown in Table 2, Examples 1 to 4 using the negative active material including the silicon particles with an average particle diameter D50 of 0.8 µm to 2 µm exhibited excellent dishchargeability at high rate and capacity retention. On the other hand, the average particle diameter D50 of the negative active material of Comparative Examples 1 to 4 was too large or too small caused the deteriorated dischargeability at high rate and capacity retention.

While this invention has been described in connection with what is presently considered to be practical example embodiments, it is to be understood that the invention is not limited to the disclosed embodiments, but, on the contrary, is intended to cover various modifications and equivalent arrangements included within the scope of the appended claims. Therefore, the aforementioned embodiments should be understood to be examples but not limiting the present invention in any way.

## Claims

1. A negative active material for a rechargeable lithium battery, comprising
a core consisting of silicon particles with an average particle diameter of about 0.8 µm to about 2 µm; and
an amorphous carbon coating layer on a surface of the core.

2. The negative active material for the rechargeable lithium battery of claim 1, wherein
an amount of the amorphous carbon coating layer is about 20 wt% or less based on the total 100 wt% of the negative active material.

3. The negative active material for the rechargeable lithium battery of claim 1, wherein
an amount of the amorphous carbon coating layer is about 5 wt% to about 20 wt% based on the total 100 wt% of the negative active material.

4. The negative active material for the rechargeable lithium battery of any one of claims 1 to 3, wherein
the average particle diameter of the silicon particles is about 0.8 µm to about 1.5 µm.

5. The negative active material for the rechargeable lithium battery of any one of claims 1 to 4, wherein
the amorphous carbon may be soft carbon, hard carbon, mesophase pitch carbide, sintered cokes, or combinations thereof.

6. A rechargeable lithium battery, comprising:
a negative electrode including a negative active material layer including a negative active material of any one of claims 1 to 5;
a positive electrode including a positive active material; and
a non-aqueous electrolyte.

7. The rechargeable lithium battery of claim 6, wherein
an amount of the silicon particles is about 80 wt% or more based on the total 100 wt% of the negative active material layer.

8. The rechargeable lithium battery of claim 6, wherein
an amount of the silicon particle is about 80 wt% to about 95 wt% based on the total 100 wt% of the negative active material layer.
